Europäisches Patentamt

European Patent Office

Office européen des brevets

(11) Publication number: **0 360 304**
**A1**

(12) **EUROPEAN PATENT APPLICATION**

(21) Application number: **89121352.2**

(22) Date of filing: **17.04.85**

(51) Int. Cl.5: **G02B 6/38** , **G02B 6/44**

(30) Priority: **02.05.84 JP 88933/84**
**08.08.84 JP 166081/84**

(43) Date of publication of application:
**28.03.90 Bulletin 90/13**

(60) Publication number of the earlier application in
accordance with Art.76 EPC: **0 160 864**

(84) Designated Contracting States:
**CH DE FR GB IT LI NL SE**

(71) Applicant: **Mori, Kei**
**3-16-3-501, Kaminoge**
**Setagaya-ku Tokyo(JP)**

(72) Inventor: **Mori, Kei**
**3-16-3-501, Kaminoge**
**Setagaya-ku Tokyo(JP)**

(74) Representative: **Patentanwälte Grünecker,**
**Kinkeldey, Stockmair & Partner**
**Maximilianstrasse 58**
**D-8000 München 22(DE)**

(54) **A connecting structure for an optical conductor tube.**

(57) The present invention relates to a connecting structure for an optical conductor tube, having an optical conductor rod (10) inserted in a pipe (11) to connect it with another optical conductor tube. The inventive connecting structure is characterized in that an optical jelly (40), with a refractive index approximately equal to that of said optical conductor rod (10), is placed in the space between the connecting surface of optical conductor rods and a spacer (41) is interposed between said optical conductor rod and said pipe through the use of an optical jelly or adhesive (42) having a refractive index smaller than that of said optical conductor rod, pipes being connected through the means of a flange in conjunction with another flange.

FIG.1

# A CONNECTING STRUCTURE FOR AN OPTICAL CONDUCTOR TUBE

## BACKGROUND OF THE INVENTION

The invention relates to a connecting structure for an optical conductor tube, having an optical conductor rod inserted in a pipe to connect with it another optical conductor tube.

The present Applicant has previously proposed various ways for guiding solar rays focused by a lens or the like into an optical conductor for transmitting solar rays therethrough onto an optional desired place for use in illumination or for other purposes. However, in general, an optical conductor cable is used for conducting the light rays and it is very expensive. Therefore, in order to lower the cost thereof, an optical conductor rod (a quartz) was chosen. The optimal length of the optical conductor rod is about 4 m in consideration of transportability and operating efficiency. In practice it is necessary to employ a plurality of optical conductor rods connected with each other. Usually the outer surface of optical conductor rods are not protected or coated. For this reason the outer surface thereof is apt to get damaged and, therefore, light rays tend to leak from the damaged portion of the optical conductor rod. Also if dust and the like are allowed to be on the outer surface of the optical conductor rod, light rays leak therefrom. In this case the optical conductor rod is protected by means of a pipe or the like for preventing light rays from leaking therefrom.

## SUMMARY OF THE INVENTION

It is the object of the invention to effectively connect optical conductor rods which are protected by pipes.

The inventive connecting structure is characterized in that an optical jelly of a refractive index which is approximately equal to that of said optical conductor rod is placed in the space between the connecting surfaces of the optical conductor rods and a spacer is interposed between said optical conductor rod and said pipe through the use of an optical jelly or adhesive having a refractive index smaller than that of said optical conductor rod, the pipes being connected through the means of a flange in conjunction with another flange.

Since optical jelly, having a refractive index approximately equal to that of the optical conductor rod, is employed in the space between the connecting surfaces of the optical conductor rods, the light energy loss in this portion is small and the connecting surface thereof can be prevented from getting vibrations damaged through or the like.

The above-mentioned features and other advantages of the present invention will be apparent from the following detailed description which goes with the accompanying drawings in which

Figure 1 is a side cross-sectional view for explaining another embodiment of a connecting structure for the optical conductor tube according to the present invention;

Figure 2 is a side cross-sectional view of the end portion of the optical conductor tube; and

Figure 3 is a view as seen from line XII-XII of Figure 2.

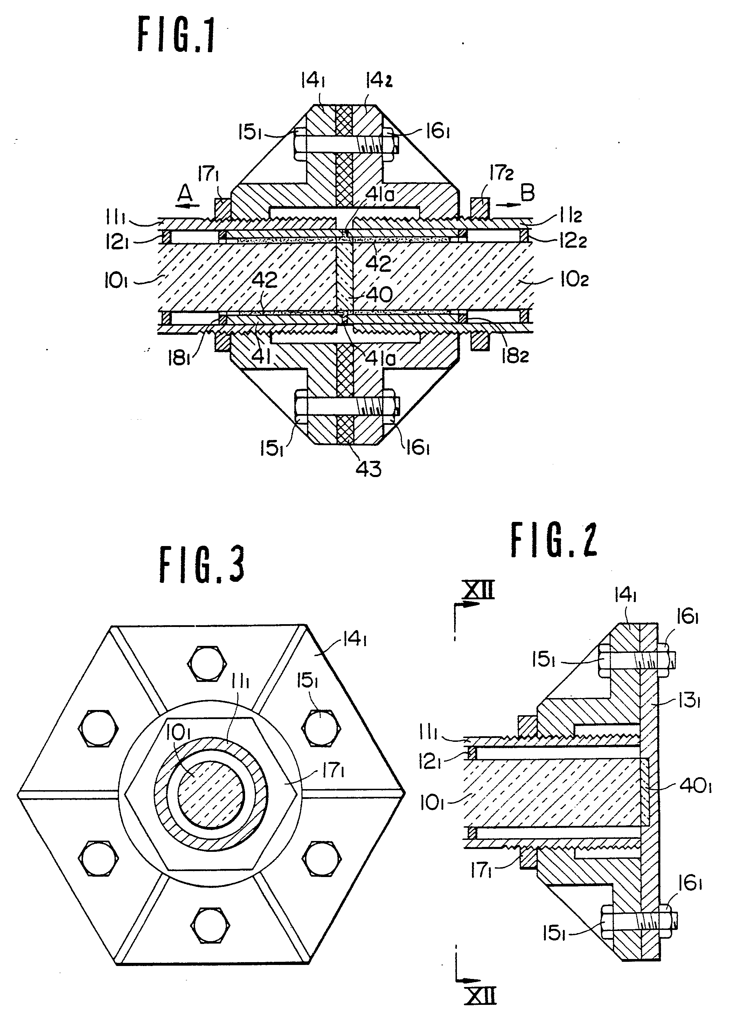

Figure 1 is a cross-sectional view for explaining an embodiment of the present invention. In this figure, $10_1$ and $10_2$ are optical conductor rods, $11_1$ and $11_2$ are protecting pipes for protecting respectively the optical conductor rods $10_1$ and $10_2$ from external damage, dust, etc., and $12_1$ and $12_2$ are support members for supporting respectively the optical conductor rods $10_1$ and $10_2$ placed inside the protective pipes $11_1$ and $11_2$. The support members are equipped to prevent the light rays from leaking out from the support members as proposed by the present Applicant.

Figure 2 is a cross-sectional view of the optical conductor rod $10_1$ side which is not connected with another optical conductor rod $10_2$.

Figure 3 is a view as seen from line XII-XII of Figure 2. As mentioned before, the optical conductor rod $10_1$ is accommodated in a protective pipe $11_1$ by means of a support member $12_1$.

However, in the case of the above-mentioned optical conductor tube, if the end portion of the optical conductor rod is kept open as it usually is, dust and the like are apt to fall on the end surface of it or it may be damaged. In order to solve such a problem, the end portion of the optical conductor tube is closed off by the use of a protective plate. In Figures 2 and 3, $13_1$ is a protective plate for covering the end portion of the optical conductor tube, and $14_1$ is a flange fixed to the pipe by a screw $11_1$. The protective plate $13_1$ is mounted on the flange $14_1$ by means of bolts $15_1$ and nuts $16_1$ so as to cover the end surface of the optical conductor tube. Also a nut $17_1$ is fixed to the pipe $11_1$ by means of a screw and a flange $14_1$, and is thereby prevented from rotating around the pipe $11_1$ by fastening the nut $17_1$ to the flange $14_1$. The flange $14_1$ is constructed in the shape of a hexagon as shown in Figure 3. In such a way, the optical conductor tube is not rotated at the time of its conveyance. Furthermore, optical jelly $40_1$, having a refractive index which is approximately equal to that of the optical conductor rod $10_1$, is provided in the space between the contact surface portions of the protective plate $13_1$ and the optical conductor rod $10_1$. In the present invention the optical jelly used is in a liquid state initially and later becomes a jelly after settling in place over a period of time. The side of the optical conductor rod $10_2$ is constructed in quite the same way as optical conductor rod $10_1$.

The present invention relates to a connecting structure for connecting an optical conductor tube constructed as described above. In the time of the connection the protective plate $13_1$ is removed from the flange $14_1$. Another protective plate at the optical conductor rod $10_2$ side is also removed. After removing the protective plate, as mentioned above, the jelly $40_1$ is removed and optical paste 40 is then attached to the optical conductor rod. After that, for instance, the paste 40 is applied to the side of the optical conductor rod $10_1$, a spacer 41 is inserted between the optical conductor rod $10_1$ and the pipe $11_1$ until it impinges against the stopper $18_1$. The spacer 41 has a length which is about two times that from the end surface of the optical conductor tube to the stopper. Opposite to the optical conductor tube at the side of the optical conductor rod $10_1$'s side, having the spacer 41 inserted in such a manner, the optical conductor tube of the optical conductor rod $10_2$'s side is inserted, and both of the optical conductor rods $10_1$ and $10_2$ are joined together by means of the optical jelly 40. Furthermore, the flanges $14_1$ and $14_2$ are not yet connected with each other. The flange $14_1$ is moved in the direction of A and the flange $14_2$ in the direction of B, and both remain there. When the afore-mentioned work is done, those flanges $14_1$ and $14_2$ are not obstructions. A packing material is represented by 43, and was previously inserted into the space of one optical conductor tubes side before the connecting work was done as described above. 41a is a plurality of adhesive pouring holes bored at approximately the central portion of space of 41. After joining the optical conductor rods $10_1$ and $10_2$ to each other as mentioned above, the optical conductor rods $10_1$ and $10_2$ and the spacer 41 are tightly fixed to each other by use of a jellified adhesive 42 poured through the adhesive pouring holes of 41a. After that, the flanges $14_1$ and $14_2$ are put together and fastened by use of nuts $17_1$ and $17_2$. The connecting work for the optical conductor tube is then finished.

As is apparent from the foregoing description, it is possible to transmit light energy to a distant place by means of an optical conductor rod. However, compared with using only an optical conductor cable as was previously the case, manufacturing costs can be reduced to a great extent by using the present method. Further, since optical jelly, having a refractive index approximately equal to that of the optical conductor rod, is employed in the space between the connecting surfaces of the optical conductor rods, the light energy loss in this portion is small and the connecting surface thereof can be prevented from getting vibrations damaged through or the like. Furthermore, as the protective pipe for protecting the optical conductor rod is connected with the other protective pipe through the packing, vibrations, extension, etc. for the protective pipe, in the direction of its axis, can be absorbed by the use of the packing. It is a merit of the present invention that the contact surface of the optical conductor rod can be protected from external forces.

## Claims

1. A connecting structure for an optical conductor tube, having an optical conductor rod $(10_1, 10_2)$ inserted in a pipe $(11_1, 11_2)$ to connect it with another optical conductor tube, **characterized in that** an optical jelly (40) of a refractive index which is approximately equal to that of said optical conductor rod $(10_1, 10_2)$ is placed in the space between the connecting surfaces of optical conductor rods $(10_1, 10_2)$ and a spacer (41) is interposed between said optical conductor rod $(10_1, 10_2)$ and said pipe $(11_1, 11_2)$ through the use of an optical jelly or adhesive (42) having a refractive index smaller than that of said optical conductor rod $(10_1, 10_2)$, pipes $(11_1, 11_2)$ being connected through the means of a flange (14 ) in conjunction with another flange $(14_2)$.

2. A connecting structure for an optical conductor tube as defined in Claim 1, **characterized in that** said spacer (41) has holes (41a) for pouring in the adhesive (42).

3. A connecting structure for an optical conductor tube as defined in Claim 1 or 2, **characterized in that** said flange $(14_1, 14_2)$ is connected with said pipe $(11_1, 11_2)$ through means of a packing which is approximately equal to that of said optical jelly.

4. A connecting structure for an optical conductor tube as defined in any one of Claims 1 through 3, **characterized in that** said flange $(14_1; 14_2)$ is fixed to said pipe $(11_1, 11_2)$ by means of a screw and mounted thereon so as to move along the axis of said pipe.

5. A connecting structure for an optical conductor tube as defined in any one of Claims 1 through 4, **characterized in that** the outer circumferential surface of said flange $(14_1, 14_2)$ is constructed in the form of a hexagon.

# FIG.1

$14_1$ $14_2$
$15_1$ $16_1$
$17_1$ A $41a$ $17_2$ B
$11_1$ $11_2$
$12_1$ $12_2$
$10_1$ $42$ $42$ $10_2$
$40$
$18_1$ $41$ $41a$ $18_2$
$15_1$ $16_1$
$43$

# FIG.3

$14_1$
$11_1$ $15_1$
$10_1$
$17_1$

# FIG.2

XII
$14_1$
$16_1$
$15_1$
$13_1$
$11_1$
$12_1$
$10_1$
$40_1$
$17_1$
$16_1$
$15_1$
XII

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1572503 (SMITHS INDUSTRIES LTD) <br> * page 2, lines 86 - 96 * | 1 | G02B6/38 <br> G02B6/44 |
| A | DE-A1-2522394 (N.V.PHILIPS'GLOEILAMPENFABRIEKEN) <br> * claim 1 * | 2 | |
| A | DE-A1-2516858 (SIEMENS AG) <br> * claim 2 * | 2 | |
| A | PATENT ABSTRACTS OF JAPAN <br> vol. 7, no. 117 (P-198)(1262) 21 May 1983, <br> & JP-A-58 035506 (HITACHI KASEI KOGYO K.K.) 02 March 1983, <br> * the whole document * | 3 | |
| A | US-A-4432603 (R.L.MORENCY ET AL.) <br> * figure 2 * | 4 | |
| A | US-A-4387956 (C.D.CLINE) <br> * column 2, lines 7 - 16; figure 5 * | 5 | |

TECHNICAL FIELDS SEARCHED (Int. Cl.4)

G02B

The present search report has been drawn up for all claims

| Place of search | Date of completion of the search | Examiner |
|---|---|---|
| BERLIN | 13 DECEMBER 1989 | FUCHS R. |